# EUROPEAN PATENT APPLICATION

(11) **EP 3 647 166 A1**
(43) Date of publication of application: **06.05.2020**
(21) Application number: 19206476.4
(22) Date of filing: 31.10.2019
(51) Int. Cl.: B62D 33/037, B60P 1/26, E05D 15/50

(54) **TRAILER WITH DOUBLE HINGE TAILGATE**

(30) Priority: 01.11.2018 GB 201817891
(71) Applicant: Brian James Trailers Ltd, Daventry, Northamptonshire NN11 8PB (GB)
(72) Inventor: Dickinson, Martin Ian, Daventry, Northamptonshire NN11 8PB (GB)
(74) Representative: Hedges, Martin Nicholas

(57) **Abstract**

A mounting pillar 16 for a trailer panel 10 has first 17 and second 18 transverse openings sized to fully receive a hinge post 15a, 15b of the trailer panel 10 therein. First and second latching members 19, 20 are associated with the transverse openings 17, 18. Each of the latching members 19, 20 is moveable along the pillar 16, and has an opening 19a, 20a and a retaining hook 19b, 20b which forms an undercut 19c, 20c which connects to the opening 19a, 20a. In one position of each latching member 19, 20, the opening 19a, 20a is aligned with the associated pillar transverse opening 17, 18 such that, in use, a hinge post 15a, 15b engaged with its longitudinal axis extending across the transverse opening 17, 18 engages in the opening 19a, 20a in the latching member 19, 20. In another position of each latching member 19, 20, the retaining hook 19b, 20b is aligned with the transverse opening 17, 18 so as to close it. The hinge post 15a, 15b engaged in the transverse opening 17, 18 is thereby retained in the undercut 19c, 20c behind the retaining hook 19b, 20b while being rotatable about its longitudinal axis.

## Description

The present invention relates to trailers and more particularly to improvements in relation to hinge arrangements to allow trailer panels such as tailgates to be hinged about 2 different axes.

So called box trailers are a type of trailer well known in the art which have a chassis on which is supported a trailer base with four side panel upstanding from the base, each side panel extending between a pair of adjacent corner pillars, to form a cubic enclosure around the base. It is common for at least one of the side panels, typically the rear end or tailgate panel, to have a hinge connection to the trailer to enable the panel to be folded down to facilitate loading and unloading. This is typically achieved by a hinge connection between the bottom edge of the panel and the base, together with posts on the supporting corner pillars which engage through respective apertures in retaining wings provided close to the upper ends of opposing sides of the panel, suitable locking means such as locking pins being engageable through the posts to retain the wings on the posts and hence the panel in the raised position.

It is further known in the art to provide such trailers with double hinged panels, that is ones which can pivot about either the bottom edge to enable the panel to be folded down for loading and unloading, or about the top edge to enable the panel to be pivoted upwards about its upper edge for allowing unloading of the trailer by tipping. This achieved by providing the hinging panel with a pair of upper hinge posts which extend outwardly away from the upper ends of the side edges of the hinging panel along a common longitudinal axis which defines an upper hinge axis for the panel, and a pair of lower hinge posts which extend outwardly away from the lower ends of the side edges of the hinging panel along a common longitudinal axis which defines a lower hinge axis for the panel. The support side pillars for the hinging panel furthermore include an upper hinge jaw, the upper hinge jaws being aligned with each other on a common axis which defines an upper hinge axis between the side pillars, and a lower hinge, the lower hinge jaws being aligned with each other on a common axis which defines a lower hinge axis between the side pillars. The upper and lower hinge jaws are spaced from each other to match the spacing of the upper and lower hinge posts of the panel such that when the hinging panel is engaged to extend between the side pillars, each of the upper hinge posts of the panel engages in a respective one of the upper hinge jaws, and each of the lower hinge posts of the panel engages in a respective one of the lower hinge jaws. Retainers, such as retaining pins, are then engageable in each of the jaws to retain each hinge post in its respective jaw in a manner which allows rotation of the pins within their respective jaws about their longitudinal axis.

This known system has the drawbacks that it can be difficult and fiddly for a person to release and re-secure the hinging panel alone due to the need to remove and re-fit the retaining pins at opposing sides of the panel. Furthermore, there is the risk of losing the retaining pins or their being stolen, and the fit of the posts within the jaws is typically quite loose, leading to significant rattling during use of the trailer.

According to a first aspect of the present invention there is provided a mounting pillar for a double hinging trailer panel, the pillar being an elongated member which extends longitudinally between first and second ends, the pillar having a first transverse opening formed in its outer surface proximate the first end and a second transverse opening formed in its outer surface proximate the second end, each of said openings extending at least partially across the width of the pillar and being sufficiently wide and deep such that, in use, the entire transverse periphery of a hinge post of a trailer panel is fully engageable in each opening, the pillar further comprising a first latching member associated with the first transverse opening and a second latching member associated with the second transverse opening, each of said first and second latching members being moveable longitudinally along the pillar between first and second positions, and each of the latching members having an opening formed therein and a retaining hook which forms an undercut which connects to the opening, wherein in the first position of each latching member, the opening is aligned with the associated transverse opening in the pillar such that, in use, a hinge post engaged with its longitudinal axis extending across the transverse opening engages in the opening in the latching member, and in the second position of each latching member, the retaining hook is aligned with the transverse opening so as to close it whereby a hinge post engaged in the transverse opening is engaged in the undercut behind the retaining hook and is thereby retained in the transverse opening in a manner which allows rotation of the hinge post about its longitudinal axis, and wherein said first and second latching members arranged in opposing orientations such that they move in opposite directions to move from their first to their second positions, and the pillar further including an actuator positioned between said first and second latching members and moveable in a first direction in order to move said first latching member from said second position to said first position and moveable in a second direction in order to move said second latching member from said second position to said first position.

A mounting pillar according to the present invention has the advantage that it provides a self contained, releasable hinge point at both the top and the bottom of the pillar which are easily opened and closed by operation of a common actuator and which operate in opposite senses so that only one can be opened at a time. This enables a trailer panel, such as a tailgate, to be operated in either a top hinging or a bottom hinging configuration in a particularly straightforward manner which does not require separation of parts which could become lost.

Preferably, each transverse opening extends across the entire width of the pillar so that a hinge post engages therein protrudes from either side of the pillar. However, each transverse opening may instead extending only partially across the width of the pillar so that an end of a hinge post engaged in the transverse opening is housed within the transverse opening.

The Pillar is preferably tubular with the latching members and actuator being housed inside the pillar. Alternatively, the latching members and actuator may be formed as sleeves which locate on the outside of the pillar, in which case the pillar need not be tubular.

Each latching member preferably has biasing means associated with it which biases it into its second position, operation of the actuator moving the respective latching member from its second position to its first position against the loading of the biasing means. Separate biasing means may be provided for each latching member, but in a preferred embodiment, a single biasing means operates on both latching members. IN particular, the biasing means comprises a spring which is attached, preferably hooked at each end, to both the first and second latching member and acts to urge them towards each other, operation of the actuator moving a respective one of the latching members away from the other of the latching members and into its first position.

Preferably, the actuator is located between the first and second latching members, the biasing means urging the first and second latching members into engagement with opposing ends of the actuator. For configurations in which the latching members and actuator are housed within a tubular pillar, the actuator then preferably includes a lever which protrudes through a slot in the pillar to enable a user to move the actuator longitudinally in the pillar from outside. The slot will then extend longitudinally partially along the pillar from the middle towards each end. The actuator is preferably rotatable, at least to a limited degree, within the pillar, and the slot advantageously intersects, at each end, a transverse slot so as to enable the actuator to be rotated once the respective latching member has reached its first position, so as to lock the actuator in place against the biasing force of the biasing means.

A stop is preferably associated with each latching member to limit its movement towards the opposing latching member.

Each latching means is preferably configured with the tip of its retaining hook pointing towards the actuator such that each latching member is moved away from the opposing latching member in order to move it into its first position.

The present invention further provides a trailer having a double hinging trailer panel, comprising a base having a mounting pillar according to the invention provided proximate opposing ends of at one least side of the base, the transverse openings proximate a first end of each pillar being aligned along a common axis which defines a first hinge axis, and the transverse openings proximate a second end of each pillar being aligned along a common axis which defines a second hinge axis.

The trailer preferably also includes a trailer panel having first and second hinge posts extending from opposing ends of the panel, the hinge posts on each end being spaced to correspond with the spacing between the transverse openings in the mounting pillars of the trailer such that trailer panel is engageable with the at least one side of the base with each of the hinges aligned with one of the transverse openings, the hinge posts being sized to be engageable in said transverse openings in a manner which allows each to rotation in its transverse opening about its longitudinal axis.

IN order that the invention may be well understood, there will now be described an embodiment thereof, given by way of example, reference being made to the accompanying drawings, in which:
Figure 1 is an view of a hinge configuration for a trailer tailgate known from the prior art;
Figure 2 is a perspective view of a double hinging trailer panel which forms part of the present invention;
Figure 3 is a perspective view of one end of the trailer panel of Figure 2 mounted to a trailer corner pillar of the invention in a closed position;
Figures 4a and 4b are transparency perspective and side views of the trailer corner pillar of Figure 3 in a fully locked position;
Figure 5 is an exploded side view of a latch mechanism which is housed within the trailer pillar of Figures 4a and 4b;
Figures 6A and 6B are transparency side and solid perspective views of the corner pillar of Figure 4 in a bottom hinging configuration;
Figure 7 is a transparency side view of the corner pillar of Figure 4 in a top hinging configuration; and
Figure 8 is a perspective view of the corner pillar of Figure 4 in a fully locked configuration.

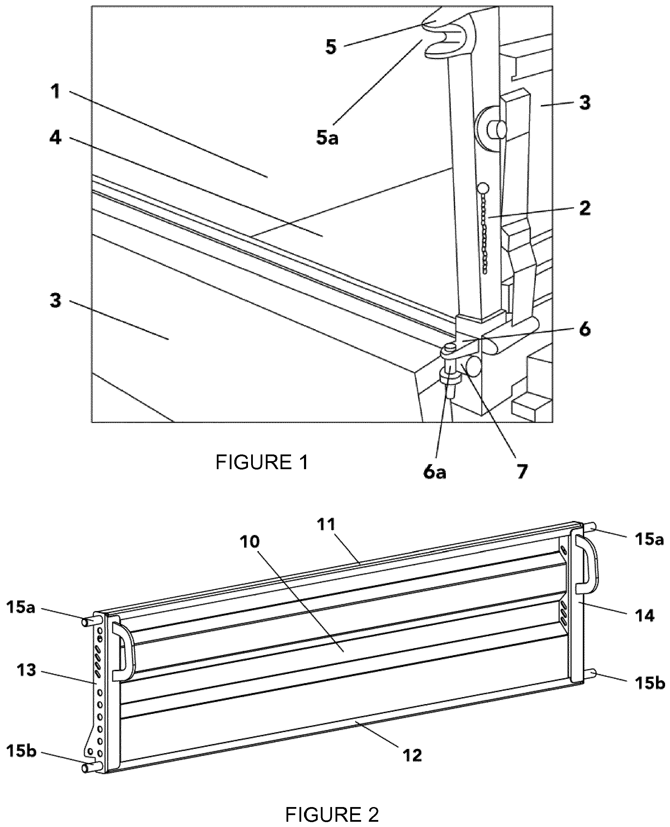

Referring first to Figure 1, there is a part of a double hinging trailer tailgate arrangement known in the art. Trailer 1 has a corner pillar 2 on each corner to support the side panels 3 which extend around the base 4. The illustrated corner pillar 2 has an upper pair of jaws 5 which form one side of an upper hinge for the panel 3, and a lower pair of jaws 6 which form one side of a lower hinge for the panel 3. Each pair of jaws 5, 6 is sufficiently spaced such that a mouth 5a, 6a defined between them is wide and deep enough to enable a hinge post 7 which extends longitudinally from a side of the panel 3 to fully engage transversely of the pillar 2 in the mouth and to be retained therein by a locking pin which is engageable through the jaws to close the mouth 5a, 6a whilst allowing the pin to rotate about its longitudinal axis.

In this way, to enable top opening of the panel, the locking pins in the upper pair of jaws 5 of the adjacent corner pillars 2 are removed, allowing the upper hinge posts to be released from the upper jaws 5 and the panel 3 rotated about the hinge created by the engagement of lower hinge posts in between the lower pairs of jaws 6 provided on the adjacent corner pillars 2. Similarly to enable top hinging of the panel for tipping of the trailer, upper hinge posts are re-engaged between the upper jaws 5 and locked in place, after which lower hinge posts are released from the lower jaws 6 by removing locking pins, thereby allowing the panel to hinge about the upper hinge posts.

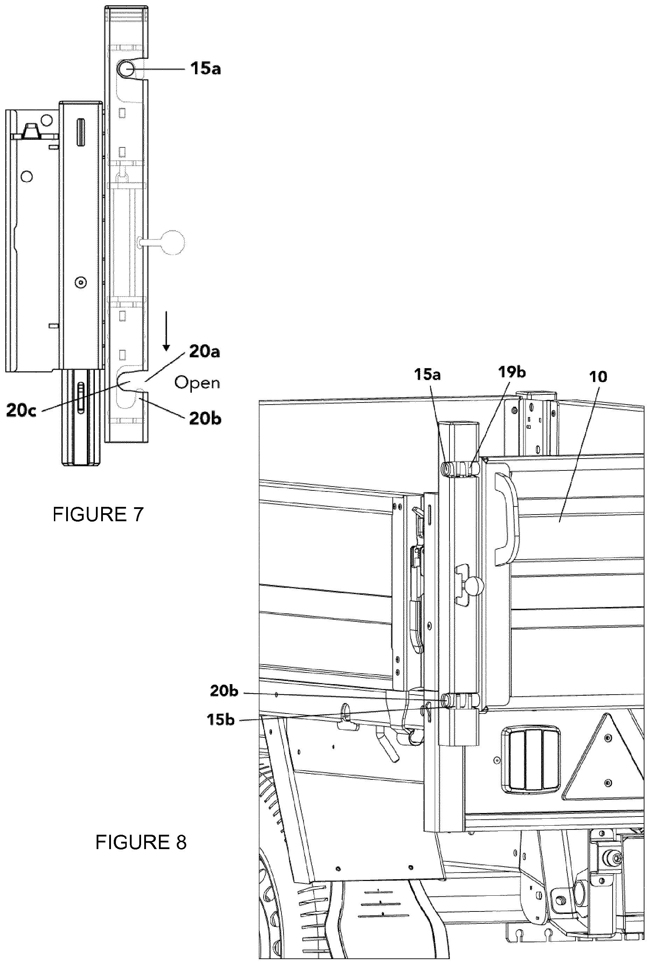

Referring next to Figures 2 to 7, there is shown a double hinging trailer panel assembly embodying the present invention. Although in the illustrated embodiment the panel is a back or tailgate panel, which fits onto the back of the trailer, it will be understood that it is equally applicable to other panels and may be implements on multiple panels of the same trailer.

The tailgate panel 10 itself, illustrated in Figure 2, is similar to panel designs which are used with the prior art system illustrated in Figure 1, being generally rectilinear in shape with opposing top 11, bottom 12 and side 13 14 edges. Each of the side edges 13, 14 has upper 15a and lower 15b hinge posts provided thereon which extend outwardly and away from the side edges parallel to the top and bottom edges 11, 12, the upper hinge posts 15a extending along a common longitudinal axis which defines an upper hinge line, and the lower hinge posts 15b extending along a common longitudinal axis which defines a lower hinge line which is parallel to but spaced apart from the upper hinge line.

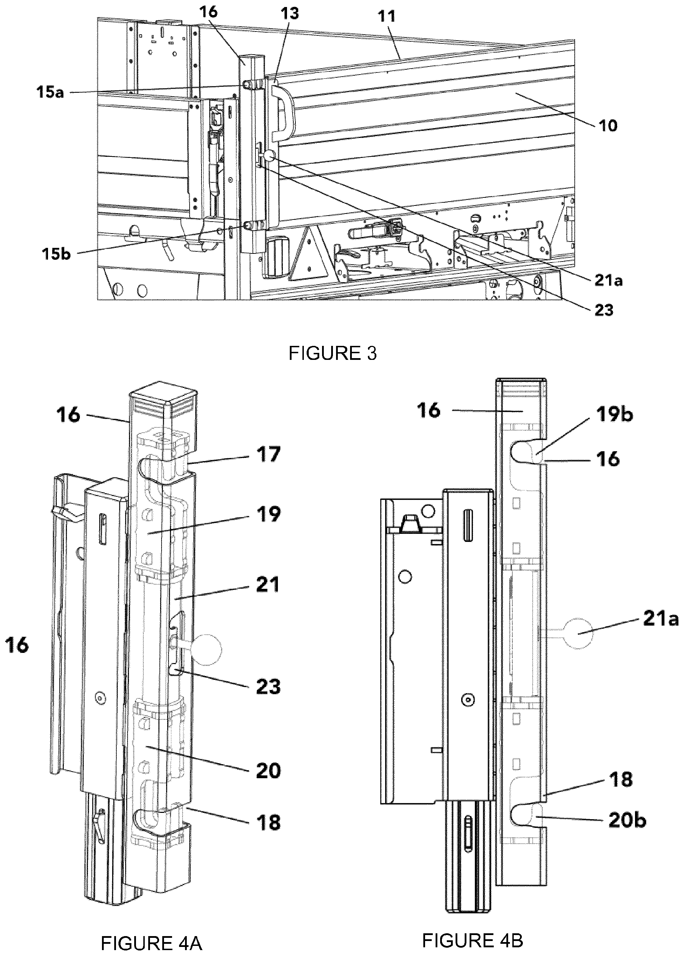

The panel 10 mounts in place on the back of the trailer between a pair of corner pillars 16 which are secured to the rear corners of the trailer in a suitable manner. As shown in Figures 4a - Figure 5, each corner pillar 16 is tubular, and in the illustrated embodiment, square in cross-section, although other cross sectional shapes are possible. Each pillar 16 has an upper transverse opening 17 and a lower transverse open 18 provided in its rear side, the openings 17, 18 being spaced longitudinally along the pillar 16 to correspond with the spacing between the upper and lower hinge posts 15a, 15b on the mating panel 10 such that when the panel 10 is engaged with the pillar 16, the upper hinge post 15a locates with the upper transverse opening 17 and the lower hinge post 15b engages with the lower transverse opening 18. Each of the transverse openings 17, 18 extends across the entire width of the side in which it is formed and is sufficiently wide and deep to allow the circumference of the mating hinge post 15a, 15b to be fully receiving in the opening 17, 18 so that an retaining hook 19b, 20b, housed within the pillar 16 can engaged between the post 15a, 15b and the mouth of the opening 17, 18 to lock each post 15a, 15b in its associated opening 17, 18 as set out below. The opening preferably taper outwardly towards the rear side of the pillar 16 so that they are wider at the mouth, as shown in Figure 4b, to make it easier for a user to locate the hinge posts in the openings 17, 18.

Housed within each pillar 16 is pair of latching members - an upper latching member 19 associated with the upper transverse opening 17, and a lower latching member 20 associated with the lower transverse opening 18, as well as an actuator 21 which sits between and is engageable with both the upper latching member 19 and the lower latching member 20. Both the latching members 19, 20 and the actuator 21 are slidably moveable longitudinally within the pillar, optionally within stop limits as set out below, and the actuator 21 includes a lever 21a which extends through a slot 23 in the rear side of the pillar and may be used by an operators to slide the actuator up and down within the pillar 16 to effect movement of the latching members 19, 20 to open and close the openings 17, 18 as described below. The slot 23 is generally C-shaped, having lateral top and bottom sections extending from the longitudinal main part of the slot, as shown in Figure 4a, and the actuator 21 has a circular cross-section such that it can rotate about the longitudinal axis of the pillar 16. In this way, when the lever 21a reaches the top or bottom of the longitudinal section of the slot 23, it may be moved across into the connecting lateral section in order to hold the actuator 21 in its raised or lowered position against a centring force applied by biasing means described below.

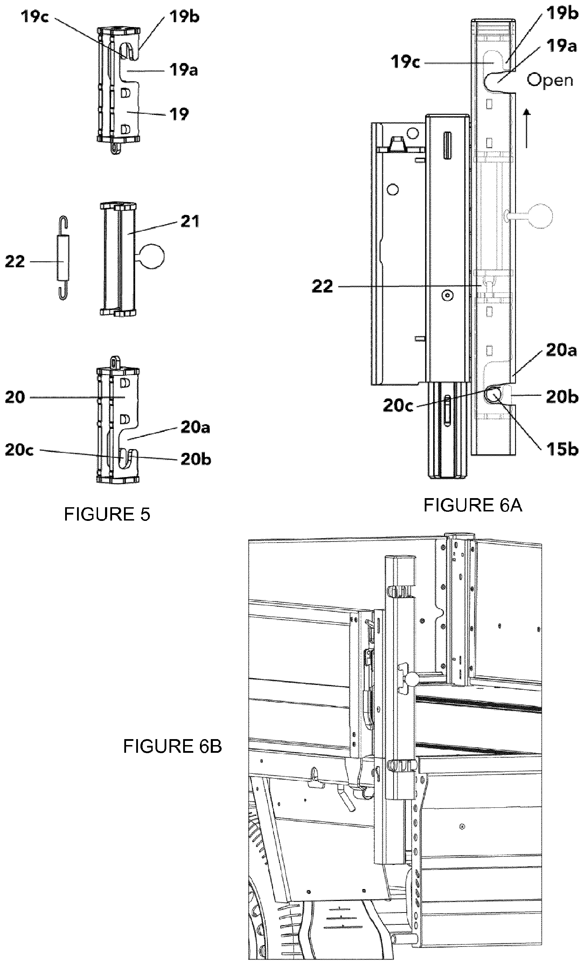

As shown more clearly in Figure 5, each of the latching members 19, 20 has an opening 19a, 20a which extends from a side which faces the mouth of the associated transverse opening 17, 18 away from said mouth and then turns 90 degrees and extends behind retaining hook 19b, 20b formed on the latching member 19, 20 to form an undercut region 19c, 20c. The openings 19a, 20a are sized to allow the circumference of the hinge posts 15a, 15b to pass therealong. In this way, when one of the latching members 19, 20 is positioned in a first, open position with its opening 19a, 20a aligned with its associated transverse opening 17, 18 of the pillar 16, the mating hinge post 15a, 15b can be engaged in the tranverse opening 17, 18 of the pillar 16 so as to pass transversely through the pillar 16 and locate in the opening 19a, 20a of the latch member 19, 20. Once fully located in the transverse opening 17, 18, the latch member 19, 20 is then moved from its first, open position, to a second, closed position by sliding in a direction to move its retaining hook 19b, 20b into alignment with its associated transverse opening 17, 18 and move the hinge post 15a, 15b into the undercut region 19c, 20c, thereby trapping the hinge post 15a, 15b in the transverse opening 17, 18 so as to prevent it being removed therefrom. The side of the undercut region 19c, 20c and transverse opening 17, 18 is such that, when trapped, each hinge post15a, 15b can still rotate within the transverse opening 17, 18 about its longitudinal axis so as to form a hinge for the panel 10.

The upper and lower latching members 19, 20 are configured in the pillar 16 in opposing sense such that the longitudinal movement of the upper latching member 19 from its open to its closed position is opposite to the longitudinal movement of the lower latching member 20 from its open to its closed position. In particular, in the illustrated embodiment, as shown in Figure 4b, in order to open the upper latching member 19 it is moved upwards, whereas in order to move the lower latching member 20 it is moved downwards. This is achieved by movement of the actuator 21 in the required direction. The actuator locates between the upper and lower latching members 19, 20 with a spring 22 extending between the latching members 19, 20 and through the actuator 21, which spring acts to bias the latching members 19, 20 towards each other and into abutment with the actuator 21 in which they are each in their closed position shown in Figure 4b.

IN order to open the upper transverse opening 17, the actuator 21 is moved upwards by the user sliding the lever 21a upwards as shown in Figure 6. This pushes the upper latching member 19 upwards against the biasing action of the spring 22, lifting the retaining hook 19b away from the upper transverse opening 17 and allowing an upper hinge post 15a to be inserted into or removed from the upper transverse opening 17. If there is already a hinge post 15b engaged in the lower transverse opening 18, it will prevent upwards movement of the lower latching member 20. Otherwise, the lower latching member may optionally be prevented from moving upwards with the upper latching member 19 and the actuator 21, under the loading of the spring 22, by a stop provided on the inside of the pillar 16, or may be allowed to move upwards with the upper latching member 19 and actuator 21.

When the actuator lever 22 is released, the tension in the spring will cause the upper latching member 19 to move back down into its closed position. The operation is reversed when the lower transverse opening is to be opening, with the lever 22 then being moved downwards rather than upwards. A stop may again optionally be provided in the pillar to prevent the upper latching member 19 moving downwards beyond its closed position in the event that there is no hinge post engaged therein during opening of the lower transverse member 18, or the upper latching member 19 may be allowed to move downwards beyond its closed position with the lower latching member 18 and actuator 21 in the event that no hinge post is engaged therein.

As with the prior art systems, the co-linear arrangement of the pairs of upper and lower hinge posts and the corresponding collinear alignment of upper pairs and lower pairs of transverse openings on pairs of pillars on adjacent corners means that, when the lower hinge posts are released from the lower latching members, the panel 10 is free to hinge about the upper hinge posts and vice-versa. Furthermore, the panel 10 can be completely removed from the trailer by releasing one of the upper and lower hinge posts and then the other of the upper and lower hinge posts.

Although the described embodiment has the actuator engaging between the upper and lower latching members, it will be appreciated that other configurations are possible, the important feature being that the movement of the upper latching member from its open to closed positions be in the opposite send to the movement of the lower latching member from its open to closed positions, and vice-versa, so as to ensure that both transverse openings are not opened simultaneously. For example, the upper and lower latching members may overlap each other, with one telescoping inside the other or the two having overlapping front and back extension panels. Overlapping actuation slots could then be provided in the two latching members through which an actuating lever extends such that, when the level is moved in one direction, it engages the bottom of the slot of one latching member whilst travelling along the other in a lost motion manner, causing only one latching member to move. When the lever is moved in the other direction, it engages the bottom of the slot of the other actuating member whilst travelling along the slot of the first, thereby effecting movement of only the other latching member.

Instead of a single biasing spring being provided which extends between the two latching members, a separate spring may be provided for each latching member, which could, for example, engage between the respective biasing member and the actuator, be a compression spring which locates between an end of each latching member and the adjacent end of the pillar to urges the latching member away from said end, between the latching member and another part of the pillar of the like.

It is also possible that the retaining hook and undercut portions of the latching members may be oriented the other way round so that moving each latching member towards the longitudinal middle of the pillar opens each transverse opening, the biasing means then urging each latching member away from the middle of the pillar.

In the illustrated embodiment, each latching member is formed by a pair of spaced apart plates which each have an opening, an undercut region and a retaining hook, the plates being joined at the top and bottom by transverse plates. Other designs are, however, also possible such as being formed from solid material.

The side of each retaining hook which faces away from the undercut region may advantageously be inclined relative to the plane of the rear surface of the pillar such that the tip of the retaining hook is further from the rear surface of the pillar than the base of the hook. This will enable a hinge post pressed against the outer surface of the hook to develop a camming action with the hook, causing it to move away from its closed position towards it open position, against the biasing force of the spring, automatically when the hinge post is pressed against it, thereby making latching of the hinge posts into the transverse openings easier.

## Claims

1. A mounting pillar for a double hinging trailer panel, the pillar being an elongated member which extends longitudinally between first and second ends, the pillar having a first transverse opening formed in its outer surface proximate the first end and a second transverse opening formed in its outer surface proximate the second end, each of said openings extending at least partially across the width of the pillar and being sufficiently wide and deep such that, in use, the entire cross section of a hinge post of a trailer panel is fully engageable in each opening, the pillar further comprising a first latching member associated with the first transverse opening and a second latching member associated with the second transverse opening, each of said first and second latching members being moveable longitudinally along the pillar between first and second positions, and each of the latching members having an opening formed therein and a retaining hook which forms an undercut which connects to the opening, wherein in the first position of each latching member, the opening is aligned with the associated transverse opening in the pillar such that, in use, a hinge post engaged with its longitudinal axis extending across the transverse opening engages in the opening in the latching member, and in the second position of each latching member, the retaining hook is aligned with the transverse opening so as to close it whereby a hinge post engaged in the transverse opening is engaged in the undercut behind the retaining hook and is thereby retained in the transverse opening in a manner which allows rotation of the hinge post about its longitudinal axis, and wherein said first and second latching members are arranged in opposing orientations such that they move in opposite directions to move from their first to their second positions, and the pillar further including an actuator positioned between said first and second latching members and moveable in a first direction in order to move said first latching member from said second position to said first position and moveable in a second direction in order to move said second latching member from said second position to said first position.

2. A mounting pillar according to claim 1, wherein each transverse opening extends across the entire width of the pillar so that a hinge post engages therein protrudes from either side of the pillar.

3. A mounting pillar according to claim 1, wherein each transverse opening may instead extending only partially across the width of the pillar so that an end of a hinge post engaged in the transverse opening is housed within the transverse opening.

4. A mounting pillar according to any of the preceding claims, wherein the pillar is tubular with the latching members and actuator being housed inside the pillar.

5. A mounting pillar according to any of claims 1 to 3, wherein the latching members and actuator are formed as sleeves which locate on the outside of the pillar.

6. A mounting pillar according to any of the preceding claims, wherein each latching member has an associated biasing means, the each latching member being biased into its second position by the associated biasing means, operation of the actuator moving the respective latching member from its second position to its first position against the loading of the biasing means.

7. A mounting pillar according to claim 6, wherein separate biasing means are provided for each latching member.

8. A mounting pillar according to claim 6, wherein a single biasing means operates on both latching members, the biasing means preferably comprising a spring which is attached, preferably hooked at each end, to both the first and second latching member and acts to urge them towards each other, operation of the actuator moving a respective one of the latching members away from the other of the latching members and into its first position.

9. A mounting pillar according to any of claims 6 to 8, wherein the actuator is located between the first and second latching members, the biasing means urging the first and second latching members into engagement with opposing ends of the actuator.

10. A mounting pillar according to any of the preceding claims, wherein the latching members and actuator are housed within a tubular pillar, the actuator including a lever which protrudes through a slot in the pillar to enable a user to move the actuator longitudinally in the pillar from outside.

11. A mounting pillar according to claim 10, wherein the slot extends longitudinally partially along the pillar from the middle towards each end.

12. A mounting pillar according to claim 10 or claim 112, wherein the actuator is rotatable, at least to a limited degree, within the pillar, and the slot intersects, at each end, a transverse slot so as to enable the actuator to be rotated once the respective latching member has reached its first position, so as to lock the actuator in place against the biasing force of the biasing means.

13. A mounting pillar according to any of the preceding claims, wherein a stop is associated with each latching member to limit its movement towards the opposing latching member, and/or wherein each latching means is configured with the tip of its retaining hook pointing towards the actuator such that each latching member is moved away from the opposing latching member in order to move it into its first position.

14. A trailer having a double hinging trailer panel, comprising a base having a mounting pillar according to any of the preceding claims proximate opposing ends of at one least side of the base, the transverse openings proximate a first end of each pillar being aligned along a common axis which defines a first hinge axis, and the transverse openings proximate a second end of each pillar being aligned along a common axis which defines a second hinge axis.

15. A trailer according to claim 16, further comprising a trailer panel having first and second hinge posts extending from opposing ends of the panel, the hinge posts on each end being spaced to correspond with the spacing between the transverse openings in the mounting pillars of the trailer such that trailer panel is engageable with the at least one side of the base with each of the hinges aligned with one of the transverse openings, the hinge posts being sized to be engageable in said transverse openings in a manner which allows each to rotation in its transverse opening about its longitudinal axis.
